Europäisches Patentamt

European Patent Office

Office européen des brevets

(19)

(11) Numéro de publication: **0 165 084**
**B1**

(12) **FASCICULE DE BREVET EUROPÉEN**

(45) Date de publication du fascicule du brevet:
12.07.89

(51) Int. Cl.⁴: **B 01 J 29/08,** C 10 G 47/16

(21) Numéro de dépôt: **85400681.4**

(22) Date de dépôt: **05.04.85**

(54) **Nouveau catalyseur d'hydrocraquage destiné à la production de distillats moyens.**

(30) Priorité: **26.04.84 FR 8406766**

(43) Date de publication de la demande:
**18.12.85 Bulletin 85/51**

(45) Mention de la délivrance du brevet:
**12.07.89 Bulletin 89/28**

(84) Etats contractants désignés:
**DE GB IT NL**

(56) Documents cité:
**EP-A-0 003 818**
**EP-A-0 028 938**
**FR-A-2 500 326**
**GB-A-2 114 594**
**US-A-3 945 943**
**US-A-4 283 309**
**US-A-4 419 271**

(73) Titulaire: **INSTITUT FRANCAIS DU PETROLE, 4,
Avenue de Bois- Préau, F-92502 Rueil- Malmaison
(FR)**

(72) Inventeur: **Dufresne, Pierre, 67 rue Georges Sand,
F-92500 Rueil- Malmaison (FR)**
Inventeur: **Marcilly, Christian, 91 ter, rue
Condorcet, F-78800 Houilles (FR)**

EP 0 165 084 B1

LIBER, STOCKHOLM 1989

**EP 0 165 084 B1**

## Description

La présente invention concerne un nouveau catalyseur d'hydroconversion de coupes pétrolières lourdes, comprenant comme constituant de base au moins une zéolithe acide du type Y spécialement modifiée.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Par rapport au craquage catalytique, l'intérêt de l'hydrocraquage catalytique est de fournir des distillats moyens, carburéacteurs et gazoles, de très bonne qualité. En revanche, l'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 m2 · g-1 environ) présentant une acidité superficielle, tels que les alumines halogénées (chlorées ou fluorées notamment), les combinaisons d'oxydes de bore et d'aluminium, les silice-alumines amorphes et les zéolithes. La fonction hydrogénante est apportée soit par un ou plusieurs métaux du groupe VIII de la classification périodique des éléments, tels que le nickel, le palladium ou le platine par exemple, soit par une association d'au moins deux métaux choisis parmi les groupes VI de la classification périodique, (molybdène et tungstène notamment), et VIII de la même classification, (cobalt et nickel notamment), deux au moins des métaux de cette association appartenant à deux groupes différents (VI et VIII précédemment cités).

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée ($\geqslant 390°$C environ), et à vitesse spatiale d'alimentation faible (la VVH exprimée en volume de charge traitée par unité de volume de catalyseur et par heure est généralement inférieure à 2), mais dotés d'une très bonne sélectivité en distillats moyens. Inversement, une fonction acide forte et une fonction hydrogénante faible donnent des catalyseurs très actifs mais présentant une mauvaise sélectivité en distillats moyens.

Les catalyseurs conventionnels de l'hydrocraquage catalytique sont, pour leur grande majorité, constitués de supports faiblement acides, tels les silice-alumines amorphes par exemple. Ces systèmes sont utilisés pour produire des distillats moyens de très bonne qualité, ou encore, lorsque leur acidité est très faible, des bases huiles.

Dans les supports peu acides, on trouve la famille des silice-alumines amorphes. Beaucoup de catalyseurs du marché de l'hydrocraquage sont constitués de silice-alumine associée, soit à un métal du groupe VIII soit, de préférence quand les teneurs en poisons hétéroatomiques de la charge à traiter dépassent 0,5 % poids, à une association des sulfures des métaux des groupes VI B et VIII. Ces systèmes ont une très bonne sélectivité en distillats moyens, et les produits formés sont de bonne qualité. Ces catalyseurs, pour les moins acides d'entre-eux, peuvent également produire des bases lubrifiantes. L'inconvénient de tous ces systèmes catalytiques à base de support amorphe est, comme on l'a dit, leur faible activité.

Les zéolithes acides présentent l'avantage par rapport aux autres supports acides précédemment cités, d'apporter une acidité beaucoup plus élevée. Les catalyseurs nouveaux qui les contiennent sont donc beaucoup plus actifs et pour cette raison, permettent de travailler à température plus basse et/ou à vitesse spatiale d'alimentation (VVH) plus élevée. En revanche, cette acidité plus élevée modifie l'équilibre entre les deux fonctions catalytiques, acide et hydrogénante. Il en résulte une modification de sélectivité notable de ces catalyseurs par rapport aux catalyseurs conventionnels: ils sont plus craquants et produisent par conséquent beaucoup plus d'essence que de distillats moyens.

La présente invention concerne un nouveau type de catalyseur zéolithique, renfermant une zéolithe dont les caractéristiques physiques et l'acidité ont été spécialement modifiées, et une matrice amorphe à base d'alumine ou d'une combinaison d'oxydes qui seront définis plus loin, et caractérisée notamment en ce qu'une partie importante de sa porosité est apportée par des pores de diamètres supérieurs à 7,5 nm. Ce nouveau type de catalyseur présente une activité et une sélectivité en distillats moyens notablement améliorées par rapport aux autres systèmes de l'art antérieur à base de zéolithes.

La zéolithe utilisée dans le catalyseur (2 à 80 % en poids, de préférence 3 à 50 %) de la présente invention est une zéolithe acide HY caractérisée par différentes spécifications, dont les méthodes de détermination seront précisées dans la suite du texte: un rapport molaire $SiO_2/Al_2O_3$ compris entre 8 et 70 et de manière préférée entre 12 et 40; une teneur en sodium inférieure à 0,15 % poids déterminée sur la zéolithe calcinée à 1100°C; un paramètre cristallin $a_o$ de la maille élémentaire compris entre 24,55 x 10-10 m et 24,24 x 10-10 m et de manière préférée entre 24,38 x 10-10 m et 24,26 x 10-10 m; une capacité $C_{Na}$ de reprise en ions sodium, exprimée en gramme de Na par 100 grammes de zéolithe modifiée, neutralisée puis calcinée, supérieure à environ 0,85 (la capacité $C_{Na}$ de reprise en ions sodium sera définie de manière plus précise au paragraphe suivant); une surface spécifique déterminée par la méthode B.E.T. supérieure à environ 400 m2 · g-1 (de préférence supérieure à 550 m2 · g-1); une capacité d'adsorption de vapeur d'eau à 25°C pour une pression partielle de 2,6 torrs (346,6 Pa) (P/P$_o$=0,10), supérieure à 6 % poids. Une répartition microporeuse, déterminée par la méthode de B.J.H., de type bimodale comprenant en plus de la classique porosité de structure centrée autour d'un diamètre de 0,8 - 0,9 nm, une microporosité secondaire se répartissant de manière plus large autour d'une valeur moyenne comprise entre 1,5 et 8,0 nm et de manière préférée entre 2,0 et 6,0 nm, la dite microporosité secondaire représentant 1 à 20 % du volume poreux de la zéolithe, tel qu'il est défini plus loin.

2

Les différentes caractéristiques sont mesurées par les méthodes précisées ci-après:

- le rapport molaire $SiO_2/Al_2O_3$ est mesuré par analyse chimique. Quand les quantités d'aluminium deviennent faibles, par exemple inférieures à 2 %, pour plus de précision, il est opportun d'utiliser une méthode de dosage par spectrométrie d'adsorption atomique;
- le paramètre de maille est calculé à partir du diagramme de diffraction des rayon X, selon la méthode décrite dans la fiche ASTM D 3.942-80. Il est clair que pour effectuer ce calcul correctement, il faut que la cristallinité du produit soit suffisante;
- la surface spécifique est déterminée à partir de l'isotherme d'adsorption d'azote à la température de l'azote liquide et calculé selon la méthode classique B.E.T.. Les échantillons sont prétraités, avant la mesure, à 500° C sous balayage d'azote sec;
- les pourcentages de reprise en eau (ou capacité d'adsorption de vapeur d'eau) sont déterminés à l'aide d'un appareillage classique de gravimétrie. L'échantillon est prétraité à 400° C sous vide primaire puis porté à une témperaure stable de 25°C. On admet ensuite une pression d'eau de 2,6 torrs (346,6 Pa), ce qui correspond à un rapport P/Po d'environ 0,10 (rapport entre la pression partielle d'eau admise dans l'appareil et la pression de vapeur saturante de l'eau à la température de 25°C);
- la capacité d'échange des ions sodium $C_{Na}$ (ou capacité de reprise en ions sodium) est déterminée de la manière suivante: un gramme de zéolithe est soumis à trois échanges successifs dans 100 cm$^3$ de solution 0,2 M de NaCl, pendant une heure à 20°C sous bonne agitation. Les solutions sont laissées à pH naturel pendant l'échange. En effet si le pH était réajusté à des valeurs proches de 7, par addition de petites quantités de soude, les taux de sodium échangé seraient supérieurs. Elle est exprimée en gramme de sodium pour 100 g de zéolithe modifiée, rééchangée puis calcinée à 1100°C;
- la distribution microporeuse est déterminée par la méthode B.J.H (BARRETT, JOYNER, HALENDA, J. of Am. Chem. Soc. Vol. 73,1951, p. 373) basée sur l'exploitation numérique de l'isotherme de désorption d'azote. La mesure est effectuée avec un appareil CARLO ERBA type SORPTOMATIC série 1800. Le volume poreux total de la zéolithe est défini ici comme le volume d'azote adsorbé (sur l'isotherme de désorption) à une pression d'azote correspondant à P/Po = 0,99.

Ces zéolithes dont on a démontré qu'elles présentaient une activité et une sélectivité remarquables vis à vis de la production de distillats moyens par hydrocraquage, sont fabriquées, généralement à partir d'une zéolithe NaY par une combinaison appropriée de deux traitements de base: (a) un traitement hydrothermique qui associe température et pression partielle de vapeur d'eau, et (b) un traitement acide par, de préférence, un acide minéral fort et concentré.

Généralement la zéolithe NaY à partir de laquelle on prépare la zéolithe selon l'invention possède un rapport molaire $SiO_2/Al_2O_3$ compris entre environ 4 et 6; il conviendra au préalable d'en abaisser la teneur en sodium (poids) à une valeur inférieure à 3 % et de préférence à 2,8 %; la zéolitne NaY possède en outre généralement une surface specifique comprise entre 750 et 950 m$^2$/g environ.

Plusieurs variantes de préparation existent qui toutes font suivre le traitement hydrothermique de la zéolithe par un traitement acide. Les traitements hydrothermiques sont des opérations connues de l'art antérieur et permettent d'obtenir des zéolithes dites stabilisées ou encore ultra-stabilisées. Ainsi MAC DANIEL et MAHER ont-ils revendiqué dans le brevet USP-3 293 192 l'obtention de zéolithes Y dites utrastables caractérisées par un paramètre cristallin de 24,45 x 10$^{-10}$ m à 24,2 x 10$^{-10}$ m et de faibles pourcentages de sodium, grâce à l'association de traitements hydrothermiques et d'échanges cationiques par des solutions de sels d'ammonium. KERR et al. ont également obtenu des zéolithes Y enrichies en silice par extraction sélective de l'aluminium grâce à un agent chélatant tel que l'éthylène diamine tétraacétique (USP-3 442 795).

EBERLY et al. ont combiné ces deux dernières techniques pour l'obtention de zéolithes désaluminées (USP-3 506 400 et USP-3 591 488). Ils montrent que le traitement hydrothermique consiste à extraire sélectivement les aluminium tétracoordinés de la charpente aluminosilicatée. Ils revendiquent cette procédure ainsi que le traitement ultérieur par des solutions contenant différents cations. Un exemple est donné avec une extraction ultérieure par HCl 0,1 N aboutissant à une faujasite ne contenant plus d'aluminium. (Cet exemple a toutefois été contesté ultérieurement par SCHERZER, lequel n'est pas parvenu à réaliser le produit ainsi décrit (Journal of Catalysis 54, 285, 1978)).

WARD décrit la fabrication de catalyseurs zéolithiques destinés à la fabrication de distillats moyens (USP-3 853 742). La zéolithe est stabilisée mais n'est pas soumise à une attaque acide à la fin de la série de traitements, et son paramètre cristallin est compris entre 24,40 et 24,50 x 10$^{-10}$ m. BEZMAN et RABO ont utilisé comme base de catalyseurs d'hydrocraquage des zéolithes plus fortement stabilisées, dont le paramètre cristallin varie de 24,20 à 24,45 x 10$^{-10}$ m (EP-0 028 938). Ce type de zéolithe est plus particulièrement caractérisé par une capacité d'échange ionique "IEC" inférieure à 0,07. La capacité d'échange est définie dans ce brevet comme:

IEC : (Ion Exchange Capacity)

$$IEC = k \frac{Na_2O \, mol}{SiO_2 \, mol}$$

k étant le rapport molaire $SiO_2/Al_2O_3$ déterminé avant le rétroéchange aux ions Na$^+$. Une zéolithe de rapport molaire $SiO_2/Al_2O_3$ égal à k, et d'IEC égal à 0,07 répond à la formule approximative:

$H_{0,93}Na_{0,07}AlO_2(SiO_2)_{k/2}$

3

La capacité de reprise en ions sodium d'un tel produit, exprimée en % poids, est:

FIG00/25

Lorsque k = 4,8, $C_{Na}$ = 0,78
Lorsque k = 10,  $C_{Na}$ = 0,45

Donc pour une valeur d'IEC inférieure ou égale à 0,07, la capacité de reprise en ion sodium $C_{Na}$ est dans tous les cas inférieure à 0,8.

La zéolithe ultra-stabilisée selon la méthode de BEZMAN et RABO est également caractérisée par un caractère hydrophobe, telle que sa capacité d'adsorption d'eau à 25°C et à une valeur de P/Po de 0,1, soit inférieure à 5 %.

SCHERZER (Journal of Catalysis 54, 285, 1978) synthétise par une combinaison de traitements hydrothermiques et acides, et caractérise par diffraction des rayons X, des zéolithes très enrichies en silice (rapport molaire $SiO_2/Al_2O_3 \geqslant$ 100). A la même époque, V. BOSACEK et al. réalisent également des traitements similaires pour obtenir une zéolithe ultra-stable de rapport $SiO_2/Al_2O_3$ de l'ordre de 75.

Ces produits sont trop fortement désaluminés et pour cette raison, leur intérêt pour l'hydrocraquage est douteux. En effet il faut maintenir un minimum d'atomes d'aluminium dans la structure pour garder une acidité suffisante nécessaire du catalyseur d'hydrocraquage.

Le brevet belge N° 895 873 indique la possibilité de réaliser l'hydrocraquage en vue de produire des distillats moyens grâce à un catalyseur contenant des zéolithes Y traitées à la vapeur d'eau puis lixiviées. Cette zéolithe ultra-stabilisée est caractérisée par différents paramètres, notamment un rapport molaire $SiO_2/Al_2O_3$ supérieur à 10, un paramètre cristallin inférieur à $24,4 \times 10^{-10}$ m, une distribution mésoporeuse particulière. La porosité d'une zéolithe Y, non traitée à la vapeur d'eau et par un acide est totalement comprise dans des pores de diamètre inférieur à $20 \times 10^{-10}$ m.

Les traitements d'ultra-stabilisation modifient cette répartition. Dans ce brevet belge N° 895 873, les traitements décrits créent une mésoporosité centrée sur environ $80 \times 10^{-10}$ m pour une zéolithe traitée à la vapeur d'eau et à environ $135 \times 10^{-10}$ m pour la même zéolithe soumise ultérieurement à un traitement acide.

On a maintenant constaté que les zéolithes préférées comme composants des catalyseurs d'hydrocraquage destiné à produire des distillats moyens doivent avoir une acidité moyenne, c'est-à-dire un rapport molaire $SiO_2/Al_2O_3$ compris entre 8 et 70 environ et de préférence 12 et 40. Une cristallinité conservée au moins à hauteur de 45 %, ce qui correspond à une surface spécifique de 400 $m^2/g$, et de préférence 60 %, ce qui correspond à une surface spécifique de 550 $m^2/g$, une répartition poreuse comprenant entre 1 et 20 % et de préférence entre 3 et 15 % du volume poreux contenu dans des pores de diamètre situé entre 20 et $80 \times 10^{-10}$ m, le reste du volume poreux étant contenu essentiellement dans des pores de diamètre inférieur à $20 \times 10^{-10}$ m.

La création de microporosité secondaire vers des diamètres de pore compris entre 20 et $80 \times 10^{-10}$ m, ainsi que l'avsence de mésoporosité au-delà de $80 \times 10^{-10}$ m, est une caractéristique de l'invention.

On a en effet constaté que les catalyseurs ainsi préparés donnent des résultats supérieurs en hydrocraquage de coupes lourdes pour produire des distillats moyens.

Sans pouvoir préjuger de toutes les raisons fondamentales qui conduisent aux propriétés remarquables de ces produits, on peut avancer quelques hypothéses.

La modification de ces zéolithes doit se faire en ménageant plusieurs exigences contradictoires: une augmentation du rapport $SiO_2/Al_2O_3$, une création de micrcporosité secondaire, une conservation de la cristallinité. L'augmentation du rapport $SiO_2/Al_2O_3$ implique un profond remodelage de la structure qui doit s'effectuer dans des conditions expérimentales bien définies, sous peine de destruction partielle ou totale du réseau cristallin. Il faut conserver une bonne cristallinité à la zéolithe, c'est-à-dire garder un réseau tridimensionnel organisé d'atomes de silicium, dans lesquelles subsistent quelques atomes d'aluminium avec leurs protons associés. Mais à l'intérieur de cette charpente tridimensionnelle microporeuse, il faut de plus ménager une microporosité secondaire qui permette de faciliter les processus de diffusion et d'accessibilité des molécules lourdes aux sites acides. Les charges d'hydrocraquage traitées par ce type de catalyseur sont des coupes de point d'ébullition initial généralement supérieur à 350°C environ, et donc, généralement le nombre moyen d'atomes de carbone d'une molécule représentative est situé entre 20 et 40; l'encombrement de ces molécules est important et les limitations diffusionnelles sont préjudiciables à l'activité du catalyseur. Il est donc avantageux de créer une microporosité secondaire dans la zéolithe qui permette de faciliter les processus de diffusion et d'accessibilité aux sites acides. Dans le mécanisme bifonctionnel de l'hydrocraquage il est important aussi que les transferts moléculaires entre les sites acides et les sites hydrogénants soient rapides. En effet les produits déshydrogénés comme les oléfines, produits de désorption des carbocations, émanant des sites acides, doivent pouvoir être hydrogénés rapidement sous peine de subir d'autres transformations sur un autre site acide. Ces produits sont en effet trés réactifs et après réadsorption, ils peuvent soit se recraquer, soit se recombiner avec d'autres molécules et donner des polycondensations. Ces deux phénomènes sont tous les deux préjudiciables au bon fonctionnement du catalyseur, le premier conduit au surcraquage et dégrade la sélectivité en distillats moyens au profit de la production d'essence voire de gaz;

le second conduit à la formation de coke et dégrade la stabilité du catalyseur. On voit donc l'importance de faciliter les étapes de diffusion dans le catalyseur. Nous avons cependant constaté que cette microporosité secondaire devait être créée par des pores dont le diamètre ne devait pas excéder $80 \times 10^{-10}$ m sous peine d'affecter la cristallinité de la zéolithe.

Cette zéolithe est mise en forme dans une matrice qui peut être une alumine, laquelle contient des mésopores. On obtient donc de préférence un catalyseur qui a une microporosité primaire inférieure à $20 \times 10^{-10}$ m due à la charpente cristalline de la zéolithe, une microporosité secondaire comprise entre 20 et $80 \times 10^{-10}$ m, due à des défauts cristallins dans le réseau de la zéolithe, et enfin, une mésoporosité due à la matrice avec laquelle la zéolithe est mélangée.

Ce type de zéolithes ultra-stables est obtenu par une combinaison de traitements hydrothermiques et de traitements en phase aqueuse en prenant les deux précautions suivantes:

- les traitements hydrothermiques de stabilisation doivent être effectués dans des conditions relativement plus douce que les procédures classiques de l'art antérieur qui permettent d'arriver aux zéolithes dites ultra-stabilisées, telles que celles décrites par MAC DANIEL et MAHER (USP-3 293 192), ou BEZMAN et RABO (EP-0 028 938), afin que le rapport Si/Al de la charpente aluminosilicatée ne soit pas trop élevé. Un traitement hydrothermique est parfaitement défini par la conjonction de trois variables opératoires qui sont: température, temps, pression partielle de vapeur d'eau. La teneur en ions sodium du produit de départ est également importante dans la mesure où ceux-ci bloquent partiellement le processus de désalumination et favorisent la destruction du réseau.

Les conditions optimum du traitement hydrothermique seront précisées plus loin.

La préparation de la zéolithe doit se terminer par un traitement en milieu acide. On a constaté que cette dernière étape avait une influence importante sur l'activité et la sélectivité d'un catalyseur d'hydrocraquage constitué d'une zéolithe Y ainsi modifiée, d'une matrice et d'une fonction hydrogénante.

Ce traitement acide de la zéolithe stabilisée a des conséquences importantes sur les propriétés physico-chimiques de la zéolithe. Il modifie la surface spécifique (mesurée par la méthode BET) de la zéolithe. La surface d'une zéolithe NaY non modifiée est comprise entre 750 et 950 m$^2$/g et plus couramment entre 800 et 900 m$^2$/g et celle d'une zéolithe Y stabilisée de paramètre cristallin inférieur à $24,50 \times 10^{-10}$ m est couramment comprise entre 350 et 750 m$^2$/g, selon la sévérité du traitement hydrothermique adopté. Après extraction acide, la surface remonte de 100 voire de 250 m$^2$/g selon le type de traitement, ce qui fait passer la valeur de la surface entre 450 et 900 m$^2$/g. Ce résultat montre que la structure a ainsi été partiellement ou totalement dégagée d'espèces aluminiques encombrant les canaux, et bouchant partiellement la microporosité. Ce traitement augmente légèrement les propriétés d'adsorption d'eau des zéolithes ainsi préparées. Ce traitement diminue également de manière substantielle le paramètre cristallin de la maille. La baisse due à ce traitement se situe entre 0,04 et 4 %, plus généralement entre 0,1 et 0,3 %. Ce traitement a enfin pour effet bénéfique de faire apparaître ou d'accroître un volume poreux dû à une microporosité secondaire centrée autour de 1,5 à 8,0 nm de diamètre (méthode B.J.H.) Les conditions optimum du traitement acide seront indiquées ci-après.

Un catalyseur d'hydrocraquage, contenant une zéolithe ainsi préparée, testé avec un résidu sous vide hydrotraité ou une autre charge lourde classique de l'hydrocraquage est beaucoup plus actif et sélectif en distillats moyens qu'un catalyseur de l'art antérieur contenant une zéolithe stabilisée non traitée par un acide. Sans préjuger des raisons de cette amélioration, on peut dire que le traitement acide a modifié la nature et la force de la fonction acide du catalyseur ainsi que l'accessibilité du site aux molécules lourdes hydrocarbonées, lesquelles comprennent typiquement 20 à 40 atomes de carbone par molécule.

La zéolithe dont les caractéristiques satisfont aux critères définis précédemment est dispersée dans une matrice généralement amorphe choisie dans le groupe constituée par les alumines du type γ, η, δ ou θ, les mélanges de ces dernières, l'oxyde, les combinaisons des oxydes de deux au moins des éléments choisis parmi le bore, le magnésium, l'aluminium, le silicium, le phosphore, le calcium, le titane, le vanadium, le chrome, le manganèse, le fer, le gallium, l'yttrium, le zirconium, l'étain, le lanthane, le cerium, le praséodyme, le néodyme et caractérisée par les propriétés texturales suivantes:

- volume poreux total: $Vpt \geqslant 0,4$ cm$^3 \cdot$ g$^{-1}$ et de préférence $\geqslant 0,5$ cm$^3 \cdot$ g$^{-1}$
- Surface spécifique: $S \geqslant 100$ m$^2 \cdot$ g$^{-1}$ et de préférence $\geqslant 150$ m$^2 \cdot$ g$^{-1}$
- Volume poreux apportés par des pores de diamètres supérieur à 7,5 nm: $V_{75} \geqslant 0,25$ cm$^3 \cdot$ g$^{-1}$ et de préférence $\geqslant 0,35$ cm$^3 \cdot$ g$^{-1}$
- $V_{75}/Vpt > 0,5$ et de préférence à 0,6.

Cette matrice a essentiellement pour rôle d'aider à mettre en forme la zéolithe, autrement dit à la produire sous forme d'agglomérats, billes, extrudés, pastilles etc., qui pourront être placés dans un réacteur industriel. La proportion de matrice dans ce catalyseur est 15 à 98 % en poids et de préférence 45 à 95.

Il est bien évident que les caractéristiques texturales idéales (surface, Vpt, $V_{75}$) du catalyseur final ne peuvent être définies de manière précise car elles sont étroitement liées aux proportions de zéolithe et de matrice et également aux quantités d'oxydes métalliques (Co et/ou Ni et Mo et/ou W) ajoutées.

Le composant d'hydro-deshydrogénation du catalyseur de la présente invention est par exemple un composé d'un métal du groupe VIII de la classification périodique des éléments, (notamment le nickel, le

5

palladium ou le platine), ou une combinaison d'au moins deux des composés précédents, ou une combinaison de composés de métaux (oxydes notamment) des groupes VI (molybdène et/ou tungstène notamment) et des métaux non nobles du groupe VIII (cobalt et/ou nickel notamment) de la classification périodique des éléments.

Le catalyseur final doit comprendre entre 1 et 80 % poids de zéolithe spécialement modifiée, et de préférence entre 3 et 50 %. Les concentrations des composés métalliques, exprimées en composé métallique sont les suivantes: 0,01 à 5 % poids de métaux du groupe VIII, et de préférence entre 0,03 et 3 % poids, dans le cas où il s'agit uniquément de métaux nobles du type palladium ou platine, 0,01 à 15 % poids de métaux du groupe VIII, et de préférence entre 0,05 et 10 % poids, dans le cas où il s'agit de métaux non nobles du groupe VIII du type nickel par exemple; lorsqu'on utilise à la fois au moins un métal ou composé de métal du groupe VIII et au moins un composé d'un métal du groupe VI, on emploie 5 à 40 % en poids d'une combinaison d'au moins un composé (oxyde notamment) d'un métal du groupe VI (molybdène ou tungstène notamment) et d'au moins un métal ou composé de métal du groupe VIII (cobalt ou nickel notamment) et de préférence 12 à 30 %, avec un rapport pondéral (exprimé en oxydes métalliques) métaux du groupe VIII sur métaux du groupe VI compris entre 0,05 et 0,8 et de préférence entre 0,13 et 0,5.

Différentes méthodes de préparation peuvent être envisagées selon le type de produit désiré. Il y a deux variantes principales qui different par le nombre de traitements hydrothermiques nécessaires. Pour des produits moyennement stabilisés, c'est-à-dire moyennement désaluminés au niveau de la charpente aluminosilicatée, un seul traitement suffit; pour des produits plus fortement stabilisés, deux traitements s'avèrent nécessaires. L'art antérieur utilise couramment les valeurs de paramètre cristallin pour situer le niveau de stabilisation.

Pour obtenir des produits dont le paramètre cristallin mesuré en fin de chaîne de préparation est situé entre $24,30 \times 10^{-10}$ m et $24,55 \times 10^{-10}$ m (zéolithe moyennement stabilisée), il peut être avantageux économiquement de n'opérer qu'un seul traitement hydrothermique. La zéolithe NaY de départ a classiquement un rapport molaire $SiO_2/Al_2O_3$ compris entre 4 et 6 et un paramètre cristallin compris entre 24,60 et $24,80 \times 10^{-10}$ m et plus généralement entre 24,65 et $24,75 \times 10^{-10}$ m. Avant d'effectuer le traitement hydrothermique, il faut abaisser le taux de sodium à moins de 3 % poids et de préférence moins de 2,8 % poids. Ceci s'effectue classiquement par des échanges répétés dans des solutions d'un sel d'ammonium ionisable, tel que le nitrate, le chlorure, le sulfate ou équivalents. La zéolithe $NH_4NaY$ ainsi obtenue peut être maintenant calcinée dans les conditions suivantes: température comprise entre 500 et 880°C et de préférence entre 600 et 830°C, pression partielle de vapeur d'eau comprise entre 0,05 et 10 bars et de préférence entre 0,1 et 5 bars, temps d'au moins 20 minutes et de préférence supérieur à une heure.

La zéolithe ainsi stabilisée est traitée par une solution diluée d'un acide organique ou inorganique, tel les acides chlorhydrique, nitrique, sulfurique, phosphorique, acétiques, oxalique, formique ou équivalents , ou par un agent complexant.

Pour obtenir des zéolithes de paramètre allant de 24,24 à $24,35 \times 10^{-10}$ m, il est préférable de recourir à deux étapes de traitement hydrothermique. La première s'effectue dans des conditions qui peuvent être très douces sur un produit dont le taux de sodium peut être relativement élevé mais toujours inférieur à 3 % et de préférence à 2,8 %, de préférence à une température comprise entre 530 et 700°C, de préférence à une pression partielle minimale de vapeur d'eau de 20 torrs (0,026 bar) et un temps d'au moins 20 minutes et si possible supérieur à une heure. Le produit subit ensuite un ou plusieurs échanges dans des solutions d'un sel d'ammonium ionisable, ou encore dans des solutions d'un acide organique ou inorganique, à condition toutefois que de préférence le pH de la solution finale ne soit pas inférieur à 0,5. Il est aussi possible d'utiliser une combinaison de ces deux types d'échange ou de mélanger l'acide à une solution de sels d'ammonium. Le taux de sodium est alors inférieur à 1 % et de préférence à 0,7 %. Intervient ensuite un deuxième traitement hydrothermique effectué dans des conditions plus sévères que le premier, à savoir une température comprise entre 600 et 900°C et de préférence entre 650 et 850°C, (la température du deuxième traitement hydrothermique étant supérieure. de 20 à 250°C à celle du premier traitement), avec de préférence une pression partielle de vapeur d'eau supérieure à 20 torrs (0,026 bar), et de préférence à 200 torrs (0,26 bar), et un temps d'au moins 30 minutes et de préférence supérieur à une heure.

Le ou les traitements hydrothermiques sont suivis de un ou plusieurs traitements extractifs dans des solutions d'un acide organique ou inorganique, tels les acides chlorhydrique, nitrique, sulfurique, perchlorique, phosphorique, acétique, oxalique, formique ou équivalents. Il est également possible d'utiliser des agents complexants comme ceux de l'art antérieur, tels que l'acide éthylène diamine tétraacétique, l'acétylacétone ou équivalents. Cependant les traitements préférés s'effectuent avec des solutions d'acide chlorhydrique ou nitrique, de normalité comprise entre 0,1 et 11 N de manière préférée entre 0,5 et 3 N. Pour ménager la cristallinité de la zéolithe, il peut être avantageux de procéder à plusieurs attaques successives douces c'est-à-dire dans des solutions d'acide de faible normalité, plutôt qu'une seule attaque dans des conditions plus sévères c'est-à-dire dans un acide concentré; les traitements acides ainsi décrits peuvent toujours être suivis ou précédés de un ou plusieurs échanges classiques avec des sels d'ammonium en vue de réduire davantage la teneur en sodium de la zéolithe finale. Cet échange ionique peut sans inconvénient être réalisé simultanément à l'attaque acide en ajoutant l'acide à la solution aqueuse de sel d'ammonium. Il est également possible après ces traitements acides de procéder à des échanges avec des cations des métaux du groupe II A, avec des cations de terres rares, ou encore des cations du chrome et du zinc, ou avec tout autre élément utile à améliorer le catalyseur.

La zéolithe HY ou NH$_4$Y ainsi obtenue peut être introduite à ce stade, dans une des matrices amorphes citées précédemment. Une des méthodes préférées dans la présente invention consiste à malaxer la zéolithe dans un gel humide d'alumine pendant quelques dizaines de minutes, puis à passer la pâte ainsi obtenue à travers une filière pour former des extrudés de diamètre compris entre 0,4 et 4 mm.

La fonction hydrogénante telle qu'elle a été définie précédemment (métaux du groupe VIII ou association d'oxydes de métaux des groupes VI et VIII) peut être introduite dans le catalyseur à divers niveaux de la préparation et de diverses manières.

Elle peut être introduite en partie seulement (cas des associations d'oxydes de métaux des groupes VI et VIII) ou en totalité au moment du malaxage de la zéolithe avec le gel d'oxyde choisi comme matrice. Elle peut être introduite par une ou plusieurs opérations d'échange ionique sur le support calciné constitué de la zéolithe HY dispersée dans la matrice choisie, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (Co et/ou Ni notamment) lorsque les précurseurs des oxydes des métaux du groupe VI (Mo et/ou W) ont été préalablement introduits au moment du malaxage du support. Elle peut enfin être introduite par une ou plusieurs opérations d'imprégnation du support calciné constitué de zéolithe HY et de la matrice, par des solutions contenant les précurseurs des oxydes de métaux des groupes VI et/ou VIII, les précurseurs des oxydes des métaux du groupe VIII étant de préférence introduits après ceux du groupe VI ou en même temps que ces derniers. Les principaux sels précurseurs qui peuvent être utilisés sont par exemple:

pour le groupe VIII (cobalt ou nickel): nitrate, acétate, sulfate des cations bivalents hydratés ou des cations hexammines Co(NH$_3$)$_6$$^{2+}$ et Ni(NH$_3$)$_6$$^{2+}$
pour le groupe VI (Mo ou W): les divers molybdates ou tungstates d'ammonium connus.

Dans le cas où les oxydes des métaux sont introduits en plusieurs imprégnations des sels précurseurs correspondants, une étape de calcination intermédiaire du catalyseur devra être effectuée à une température comprise entre 250 et 600°C.

L'imprégnation du molybdène peut être facilitée par ajout d'acide phosphorique dans les solutions de paramolybdate d'ammonium.

Les catalyseurs ainsi obtenus sont utilisés pour l'hydrocraquage de coupes lourdes, et présentent une activité améliorée par rapport à l'art antérieur, et ont de plus une sélectivité améliorée pour la production de distillats moyens de très bonne qualité.

Les charges employées dans ce procédé sont des gas oils, des gas oils sous vide, des résidus désasphaltés ou hydrotraités ou équivalents. Elles sont constituées au moins à 80 % en volume de composés dont les points d'ébullition sont situés entre 350 et 580°C. Elles contiennent des hétéroatomes tels que soufre et azote. Les conditions de l'hydrocraquage telles que, température, pression, taux de recyclage d'hydrogène, vitesse volumique horaire, devront être adaptées à la nature de la charge, caractérisée notamment par la gamme des points d'ébullition, la teneur en aromatiques ou polyaromatiques, la teneur en hétéroatomes. Les teneurs en azote sont comprises généralement entre 5 et 2 000 ppm, et les teneurs en soufre entre 50 et 30 000 ppm.

Les températures sonten général supérieures à 230°C et souvent comprises entre 300°C et 430°C. La pression est supérieure à 15 bar et en général supérieure à 30 bar. Le taux de recyclage d'hydrogène sont au minimum de 100 et souvent compris entre 260 et 3000 litres d'hydrogène par litre de charge. La vitesse volumique horaire est comprise en général entre 0,2 et 10.

Les résultats qui importent au raffineur sont l'activité et la sélectivité en distillats moyens. Les objectifs fixés doivent être réalisés dans des conditions compatibles avec la réalité économique. Ainsi le raffineur cherche-t-il à diminuer la température, la pression, le taux de recyclage d'hydrogène et à maximiser la vitesse volumique horaire. Il est connu que la conversion peut être augmentée par une élévation de température, mais c'est souvent au détriment de la sélectivité. La sélectivité en distillats moyens s'améliore avec une augmentation de la pression ou du taux de recyclage d'hydrogène, mais ceci au détriment de l'économie du procédé. Ce type de catalyseurs permet d'atteindre dans des conditions de marche classique des sélectivités en distillats de point d'ébullition compris entre 150 et 380°C supérieurs à 65 %, et ceci pour des niveaux de conversion, en produits de point d'ébullition inférieur à 380, supérieurs à 55 % en volume. Ce catalyseur présente de plus, dans ces conditions, une stabilité remarquable, ce qui est dû notamment à la haute surface spécifique du produit. Enfin, du fait de la composition du catalyseur et de la qualité de la zéolithe, le catalyseur est facilement régénérable.

Les caractéristiques de l'invention sont précisées par quelques exemples présentés ci-après:

**Exemple 1**: Préparation d'une zéolithe HY stabilisée et traitée par un acide

On utilise une zéolithe NaY de formule Na AlO$_2$ (SiO$_2$)$_{2,5}$.
Cette zéolithe dont les caractéristiques sont:

| rapport SiO$_2$/Al$_2$O$_3$ molaire: | 5 |
| paramètre cristallin: | 24,69 x 10$^{-10}$ m |
| Capacité d'adsorption de vapeur d'eau à 25°C (à P/Po: 0,1): | 26 % |
| Surface spécifique: | 880 m$^2$/g |

est soumise à quatre échanges consécutifs dans des solutions de nitrate d'ammonium de concentration 2M, à une température de 95°C, pendant un temps de 1 h 30, et avec un rapport volume de solution sur poids de zéolithe égal à 8. Le taux de sodium de la zéolithe NaNH$_4$ obtenu est de 0,95 % poids. Ce produit est ensuite introduit rapidement dans un four préchauffé à 770°C et laissé pendant 4 heures en atmosphère statique (donc en l'absence de tout balayage gazeux). La zéolithe est ensuite soumise à un traitement acide dans les conditions suivantes: le rapport entre le volume d'acide nitrique 2N et le poids de solide est de 6, la température est de 95°C, et le temps de 3 heures. Ensuite un autre traitement dans les mêmes conditions est effectué, mais avec un acide de normalité 0,3N. Le rapport molaire SiO$_2$/Al$_2$O$_3$ est alors de 18, le taux de sodium résiduel de 0,1 %, le paramètre cristallin de 24,32, la surface spécifique de 805 m$^2$/g, la capacité de reprise en eau de 13,7 % la capacité de reprise en ions sodium de 1,8 % poids, le pourcentage de volume poreux contenu dans des pores de diamètre 25 à 60 x 10$^{-10}$ m de 11 %, le reste du volume poreux étant contenu dans des pores de diamètre inférieur à 20 x 10$^{-10}$ m.

**Exemple 2**: Préparation d'une zéolithe HY stabilisée et traitée par un acide

La zéolithe NaY utilisée dans l'exemple 1 est soumise à deux échanges dans des solutions de chlorure d'ammonium de façon à ce que le taux de sodium soit de 2,5 %. Le produit est ensuite introduit dans un four froid et calciné sous air sec jusqu'à 400°C. A cette température, on introduit dans l'atmosphère de calcination un débit d'eau correspondant, après vaporisation, à une pression partielle de 380 torrs (50.661 Pa). La température est alors portée à 565°C pendant 2 heures. Le produit est ensuite soumis à un échange avec une solution de chlorure d'ammonium suivie d'un traitement acide très ménagé aux conditions suivantes: volume d'acide chlorhydrique 0,4 N sur poids de solide de 10, temps de 3 heures. Le taux de sodium baisse alors jusqu'à 0,6 %, le rapport SiO$_2$/Al$_2$O$_3$, est de 7,2. Ce produit est alors soumis à un self-steaming à 780°C pendant 3 heures, puis à nouveau repris en solution acide par de l'acide chlorhydrique de normalité 2 et un rapport volume de solution sur poids de zéolithe de 10. Le paramètre cristallin est de 24,28 x 10$^{-10}$ m, la surface spécifique de 825 m$^2$/g, la capacité de reprise en eau de 11,7, la capacité de reprise en ions sodium de 1,2 % poids. La teneur en sodium est de 0,05 % poids, et le pourcentage de volume poreux contenu dans des pores de diamètre 2 à 6 mm de 13 %, le reste du volume poreux étant contenu dans des pores de diamètre inférieur à 20 x 10$^{-10}$ m.

**Exemple 3**: Préparation des catalyseurs A et B, selon la présente invention

Les zéolithes des exemples 1 et 2 sont utilisées pour préparer des catalyseurs de composition pondérale suivante:

13,5 % zéolithe
4,5 % NiO
15 % MoO$_3$
67 % Al$_2$O$_3$ (matrice)

L'alumine de départ est une pseudo-boehmite obtenue par hydrolyse d'un alcoolate d'aluminium. Elle est notamment commercialisée par la Société CONDEA sous l'appellation PURAL (comparable au produit CATAPAL commercialisé aux USA par Conoco Chemical Division of Continental Oil Company) et peut être obtenue dans plusieurs qualités différentes correspondant à des dimensions D de particules d'alumine différentes:

PURAL SB: dimensions D des particules réparties autour de 10 nm environ.
PURAL 100: dimensions D réparties autour de 20 nm environ
PURAL 200: dimensions D réparties autour de 40 nm environ

Pour le présent exemple, la qualité d'alumine retenue est le PURAL SB.

Cette alumine est tout d'abord peptisée par ajout d'acide nitrique de manière à obtenir une pâte, soigneusement mélangée et malaxée avec la zéolithe, puis extrudée par une filière de diamètre 1,6 mm, séchée à 120°C pendant 16 heures et calcinée pendant 2 heures à 500°C, la montée en température se faisant à une vitesse de 2,5°C par minute. Le support obtenu est ensuite imprégné en deux étapes successives par une solution d'heptamolybdate d'ammonium puis de nitrate de nickel, ces deux étapes étant séparée par une

8

calcination de 2 heures à 400°C. Le catalyseur est enfin calciné à 500°C pendant 2 heures. A la zéolithe décrite dans l'exemple 1 correspond le catalyseur A et à celle de l'exemple 2, le catalyseur B. Les catalyseurs A et B ont des surfaces spécifiques respectivement égales à 247 $m^2 \cdot g^{-1}$ et 258 $m^2 \cdot g^{-1}$.

L'alumine PURAL SB peptisée et malaxée seule (pas d'addition de sels de nickel et de molybdène, ni de zéolithe) extrudée puis calcinée comme précédemment (2 heures, 500°C) présente les caractéristiques texturales suivantes conformes aux propriétés requises pour la matrice de la présente invention, à savoir:

S      = 218 $m^2 \cdot g^{-1}$
Vpt    = 0,62 $cm^3 \cdot g^{-1}$
$V_{75}$     = 0,45 $cm^3 \cdot g^{-1}$
$V_{75}$/Vpt = 0,77
Na     = 0,004 % poids

**Exemple 4** (comparatif): Préparation des catalyseurs C et D

A partir des zéolithes des exemples 1 et 2, on recommence une préparation comparable à celle de l'exemple 3 pour aboutir à des catalyseurs C et D ayant une composition chimique identique à celles des catalyseurs A et B, mais en partant d'une alumine différente de celle de l'exemple précédent.

L'alumine de départ utilisée dans le présent exemple est une alumine hydratée de structure bayerite obtenue par précipitation puis mûrissement vers pH 11 à partir d'une solution de nitrate d'aluminium.

L'hydroxyde obtenu est filtré, lavé plusieurs fois puis séché à 150°C pendant 1 heure.

Les catalyseurs C et D obtenus à partir de cette alumine ont des surfaces spécifiques respectives de 314 $m^2 \cdot g^{-1}$ et 303 $m^2 \cdot g^{-1}$

Des extrudés d'alumine pure obtenue selon une technique similaire à celle des supports des catalyseurs C et D, à partir de l'alumine de départ utilisée pour la préparation de ces mêmes catalyseurs, présentent les caractéristiques texturales suivantes ($V_{75}$ et $V_{75}$/$V_{pt}$ n'étant pas conformes ici à l'invention):

S      = 297 $m^2 \cdot g^{-1}$
Vpt    = 0,51 $cm^3 \cdot g^{-1}$
$V_{75}$     = 0,21 $cm^3 \cdot g^{-1}$
$V_{75}$/Vpt = 0,41
Na     = 0,009 % poids

**Exemple 5**: Préparation du catalyseur E selon la présente invention

Une silice-alumine de composition pondérale 25 % $SiO_2$ - 75 % $Al_2O_3$ est préparée par les successives étapes suivantes:

1) neutralisation d'une solution de silicate de sodium par $NO_3H$
2) lavage du gel de silice obtenu
3) addition d'une solution de nitrate d'aluminium à la suspension du gel de silice
4) addition d'ammoniaque pour précipiter l'hydroxyde d'aluminium
5) lavage et filtration du gel de silice-alumine obtenu pour éliminer au maximum les ions gênants ($Na^+$, $NO_3^-$).

Le catalyseur E est préparé en incorporant soigneusement la zéolithe de l'exemple n° 1 dans la silice-alumine ainsi obtenue, en malaxant le mélange, en l'extrudant à l'aide d'une filière de 1,6 mm, puis en calcinant les extrudés à 500°C pendant 2 heures, avec une vitesse de montée en température identique à celle de l'exemple 3. Le support obtenu est ensuite imprégné d'une manière identique à celle définie dans l'exemple 3 et enfin calciné à 500°C pendant 2 heures. Le catalyseur final E a la composition pondérale finale:

13,5 % zéolithe
 4,5 % NiO
15    % $MoO_3$
67    % $Al_2O_3$

La silice-alumine pure obtenue dans cet exemple, malaxée et extrudée dans les mêmes conditions que celles du support du catalyseur E, présente les caractéristiques texturales suivantes conformes à l'invention:

S      = 440 $m^2 \cdot g^{-1}$
Vpt    = 0,9 $cm^3 \cdot g^{-1}$

9

EP 0 165 084 B1

$V_{75}$ = 0,56 cm$^3$ · g$^{-1}$
$V_{75}$/Vpt = 0,62
Na = 0,026 % poids

## Exemple 6 (comparatif): Préparation du catalyseur F

On prépare ce nouveau catalyseur F dans des conditions et selon une méthode comparable à celle de l'exemple 5, mais en modifiant la technique de synthèse de la silice-alumine de façon à améliorer la combinaison des oxydes d'aluminium et de silicium. Pour atteindre ce résultat, on peut notamment racourcir la durée des étapes de mûrissement et de lavage du gel de silice pour éviter ou limiter le vieillissement de ce dernier; on peut précipiter l'alumine très lentement par addition progressive d'ammoniaque de manière à limiter les hétérogénéités locales de composition qui favorisent la formation de grosses particules d'alumine peu combinées à la silice; enfin on peut effectuer une maturation du gel de silice-alumine obtenu entre 50 et 80°C pendant plusieurs heures pour améliorer la combinaison des oxydes.

Une silice-alumine pure ainsi obtenue, utilisée dans cet exemple pour préparer le catalyseur F, a été malaxée, extrudée et calcinée dans les mêmes conditions que le support du catalyseur E. Elle présente les caractéristiques texturales suivantes ($V_{75}$/$V_{pt}$ non conforme à l'invention):

S = 518 m$^2$ · g$^{-1}$
Vpt = 0,78 cm$^3$ · g$^{-1}$
$V_{75}$ = 0,32
$V_{75}$/Vpt = 0,40
Na = 0,0032 % poids

## Exemple 7: Conditions du test à haute pression

Les catalyseurs dont les préparations sont décrits aux exemples précédents sont utilisés dans les conditions de l'hydrocraquage sur une charge dont les caractéristiques suivent:

| charge | | |
|---|---|---|
| | Point initial | 318°C |
| | Point 10 % | 378 |
| | Point 50 % | 431 |
| | Point 90 % | 467 |
| | Point final | 494 |
| | Densité d$^{20}_4$ | 0,854 |
| | N (ppm) | 980 |
| | % S | 1,92 (poids) |

L'unité de test catalytique comprend un réacteur en lit fixe monté en "up flow" où sont introduits 60 ml de catalyseur. Le catalyseur est présulfuré par un mélange $H_2$/$H_2S$ (97 - 3) jusqu'à 420°C. La pression est de 120 bars, le recyclage d'hydrogène de 1 000 litres par litre de charge: la vitesse volumique horaire de 1.

## Exemple 8: Résultats obtenus avec les catalyseurs A, B, C et D

Les catalyseurs ont été comparés à conversion sensiblement voisine et donc à des températures légèrement différentes.

La conversion est définie comme étant la fraction de la recet te à point d'ébullition inférieur à 380°C.

La sélectivité est·définie comme étant la fraction de la recette d'ébullition compris entre 150 et 380°C, ramenée à la conversion.

Les résultats sont présentés dans le tableau suivant:

| Catalyseur | T°C | Conversion | Sélectivité |
|---|---|---|---|
| A | 355 | 81,8 | 76,2 |
| B | 360 | 80,1 | 78,1 |
| C | 365 | 80,5 | 69,5 |
| D | 370 | 79,7 | 70,4 |

Ce tableau montre que les catalyseurs A et B préparés selon la présente invention ont une activité et une

10

sélectivité en distillat moyen supérieures à celles des catalyseurs C et D.

**Exemple 9**: Résultats obtenus avec les catalyseurs E et F

Les résultats sont présentés dans le tableau suivant:

| Catalyseur | T °C | Conversion | Sélectivité |
|---|---|---|---|
| E | 360 | 80,2 | 74,9 |
| F | 365 | 78,1 | 68,6 |

Le catalyseur E préparé selon la présente invention a une activité et une sélectivité supérieures à celles du catalyseur F.

**Exemple 10**: Conditions du test à basse pression

Les catalyseurs A et C sont comparés dans un test basse pression sur charge assez faiblement polluée en soufre et azote. Le test s'inscrit dans une optique d'hydrocraquage à basse pression sur une charge préalablement hydrotraitée.

Un résidu sous vide de densité ($d^{20}_4$) 0,906 et de teneur en soufre 2,37 % poids est hydrotraité à 60 bars sur un catalyseur conventionnel non acide; la recette est distillée et la coupe 295 - 500 est à son tour hydrocraqjée sur les catalyseurs A et B à 60 bars. La charge a les caractéristiques suivantes:

$d^{20}_4$     = 0,871
S (ppm)   = 500
N (ppm)   = 130

La pression est de 60 bar, le recyclage d'hydrogène de 700 litres d'hydrogène par litre de charge, la vitesse volumique horaire de 1.

**Exemple 11**: Résultats obtenus avec les catalyseurs A et C dans le test basse pression.

La conversion et la sélectivité sont définies comme dans l'exemple 8. Ici on a opéré avec sensiblement les mêmes températures pour les deux catalyseurs.

Les résultats sont présentés dans le tableau suivant:

| Catalyseur | T | Conversion | Sélectivité |
|---|---|---|---|
| A | 350 | 76,5 | 57,2 |
|  | 340 | 64,3 | 69,6 |
| C | 350 | 71,2 | 52,8 |
|  | 340 | 59,7 | 65,1 |

**Revendications**     .

1. Catalyseur renfermant en poids
   a) 15 à 98 % d'une matrice choisie dans le groupe constitué par au moins l'alumine γ, η, δ ou θ, les mélanges de ces dernières, l'argile et les combinaisons des oxydes de deux au moins des éléments choisis parmi: le bore, le magnésium, l'aluminium, le silicium, le phosphore, le calcium, le titane, le vanadium, le chrome, le manganèse, le fer, le zinc, le gallium, l'yttrium, le zirconium, l'étain, le lanthane, le cérium, le praséodyme et le néodyme, et caractérisée par les propriétés texturales suivantes:

Vpt     $\geqslant 0,4 \, cm^3 \cdot g^{-1}$
S       $\geqslant 100 \, m^2 \cdot g^{-1}$
$V_{75}$     $\geqslant 0,25 \, cm^3 \cdot g^{-1}$
$V_{75}$/Vpt $\geqslant 0,5$

b) 1 à 80 % d'une zéolithe caractérisée par:
- un rapport molaire $SiO_2/Al_2O_3$ compris entre 8 et 70;
- une teneur en sodium inférieure à 0,15 % en poids déterminée sur la zéolithe calcinée à 1100°C;
- un paramètre $a_0$ de la maille élémentaire compris entre $24,55 \times 10^{-10}$ m et $24,24 \times 10^{-10}$ m;
- une capacité $C_{Na}$ de reprise en ions sodium, exprimée en gramme de sodium par 100 grammes de zéolithe modifiée, neutralisée et calcinée, supérieure à environ 0,85;
- une surface spécifique supérieure à environ 400 $m^2 \cdot g^{-1}$;
- une capacité d'adsorption de vapeur d'eau à 25°C (à un rapport P/Po égal à 0,10) supérieure à 6 % poids;
- une répartition poreuse comprenant entre 1 et 20 % du volume poreux contenu dans des pores de diamètres situés entre 20 et $80 \times 10^{-10}$ m, le reste du volume poreux étant essentiellement contenu dans des pores de diamètres inférieurs à $20 \times 10^{-10}$ m;
c) au moins un métal ou un composé de métal choisi dans le groupe constitué par les métaux nobles ou non nobles du groupe VIII de la classification périodique des éléments, la concentration en métal ou métaux nobles du groupe VIII, exprimée en composé(s) de ce ou ces métaux, étant comprise entre 0,01 et 5 %, la concentration en métal ou métaux non nobles du groupe VIII, exprimée en composé(s) de ce ou ces métaux, étant comprise entre 0,01 et 15 %.

2. Catalyseur renfermant en poids:
a) 45 à 95 % d'une matrice choisie dans le groupe constitué par au moins l'alumine γ, η, (δ ou θ), les mélanges de ces dernières, l'argile, les combinaisons des oxydes de deux au moins des éléments choisis parmi le bore, le magnésium, l'aluminium, le silicium, le phosphore, le calcium, le titane, le vanadium, le chrome, le manganèse, le fer, le zinc, le gallium, l'yttrim, le zirconium, l'étain, le lanthane, le cérium, le praséodyme et le néodyme,et caractérisée par les propriétés texturales suivantes:

$$Vpt \geqslant 0,5 \ cm^3 \cdot g^{-1}$$
$$S \geqslant 150 \ m^2 \cdot g^{-1}$$
$$V_{75} \geqslant 0,35 \ cm^3 \cdot g^{-1}$$
$$V_{75}/Vpt \geqslant 0,6$$

b) 3 à 50 % d'une zéolithe caractérisée par:
- un rapport molaire $SiO_2/Al_2O_3$ compris entre 12 et 40;
- une teneur en sodium inférieure à 0,15 % en poids déterminée sur la zéolithe calcinée à 1100°C;
- un paramètre $a_0$ de la maille élémentaire compris entre $24,38 \times 10^{-10}$ m et $24,26 \times 10^{-10}$ m;
- une capacité $C_{Na}$ de reprise en ions sodium, exprimée en grammes de sodium par 100 grammes de zéolithe modifiée, neutralisée et calcinée, supérieure à environ 0,85;
- une surface spécifique supérieure à environ 550 $m^2 \cdot g^{-1}$;
- une capacité d'adsorption de vapeur d'eau à 25°C (à un rapport P/Po égal à 0,10) supérieure à 6 % poids;
- une répartition poreuse comprenant entre 3 et 15 % du volume poreux contenu dans des pores de diamètres situés entre $20 \times 10^{-10}$ m et $80 \times 10^{-10}$ m, le reste du volume poreux étant essentiellement contenu dans des pores de diamètres inférieurs à $20 \times 10^{-10}$ m.
c) au moins un métal ou un composé de métal choisi dans le groupe constitué par les métaux nobles ou non nobles du groupe VIII de la classification périodique des éléments, la concentration en métal ou métaux nobles du groupe VIII, exprimée en composé(s) de ce ou ces métaux, étant comprise entre 0,03 et 3 %, la concentration en métal ou métaux non nobles du groupe VIII, exprimée en composé(s) de ce ou ces métaux, étant comprise entre 0,05 et 10 %.

3. Catalyseur selon l'une des revendications 1 à 2 dans lequel on utilise au moins un composé d'un métal du groupe VIII choisi dans le groupe constitué par le cobalt et le nickel, en association avec au moins un composé d'un métal du groupe VI de la classification périodique des éléments, la concentration totale en métaux des groupes VIII et VI étant comprise entre 5 et 40 %, le rapport pondéral (exprimé en oxydes métalliques) métal ou métaux du groupe VIII/métal ou métaux du groupe VI étant compris entre 0,05 et 0,8.

4. Catalyseur selon la revendication 3 dans lequel le métal du groupe VI est le molybdène ou le tungstène, la concentration totale en métaux des groupes VIII et VI étant comprise entre 12 et 30 %, le rapport pondéral métal ou métaux du groupe VIII/métal ou métaux du groupe VI étant compris entre 0,13 et 0,5.

5. Procédé de fabrication d'un catalyseur selon l'une des revendications 1 à 4 consistant à mélanger une matrice avec une zéolithe et à introduire en une ou plusieurs étapes soit dans la matrice, soit dans la zéolithe, soit dans le mélange de matrice et de zéolithe, le ou les métaux ou composé(s) de métaux du groupe VIII et éventuellement du groupe VI, la zéolithe étant préparée à partir d'une zéolithe NaY ayant généralement un rapport molaire $SiO_2/Al_2O_3$ compris entre 4 et 6, un paramètre cristallin compris entre $24,60 \times 10^{-10}$ m à $24,80 \times 10^{-10}$ m et une surface généralement comprise entre 750 et 950 $m^2/g$, la préparation de la zéolithe consistant:
- à abaisser le taux de sodium de la zéolithe NaY à une valeur comprise inférieure à 3 % en poids par au moins un échange avec une solution d'un sel d'ammonium ionisable, de façon à obtenir une zéolithe $NH_4NaY$;
- à calciner entre 500 et 880°C, en au moins une étape la zéolithe $NH_4NaY$ (traitement hydrothermique) entre 0,05 et 10 bars pendant au moins vingt minutes, pour obtenir une zéolithe dite stabilisée;
- a traiter la zéolithe dite stabilisée en au moins une étape par au moins une solution d'un acide organique ou inorganique ou d'un agent complexant acide.

6. Procédé selon la revendication 5 dans lequel la préparation de la zéolithe consiste:

- à abaisser le taux de sodium de la zéolithe Y-Na à une valeur inférieure à 2,8 % environ en poids par au moins un échange avec une solution d'un sel d'ammonium ionisable, de façon à obtenir une zéolithe NH$_4$NaY;
- à calciner en au moins une étape la zéolithe NH$_4$NaY (traitement hydrothermique) entre 600 et 830°C, sous une pression partielle de vapeur d'eau comprise entre 0,1 et 5 bars, pendant au moins une heure, pour obtenir une zéolithe dite stabilisée;
- à traiter la zéolithe dite stabilisée en au moins une étape, par une solution d'acide chlorhydrique ou nitrique de normalité comprise entre 0,1 et 11 N de préférence entre 0,5 et 3 N.

7. Procédé de fabrication d'un catalyseur selon l'une des revendications 1 à 4 consistant à mélanger une matrice avec une zéolithe et à introduire en une ou plusieurs étapes soit dans la matrice, soit dans la zéolithe soit dans le mélange de matrice et de zéolithe le ou les métaux ou composé(s) de métaux du groupe VIII et éventuellement du groupe VI, la zéolithe étant préparée à partir d'une zéolithe Y-Na ayant généralement un rapport molaire SiO$_2$/Al$_2$O$_3$ compris entre 4 et 6, un paramètre cristallin compris entre 24,65 et 24,75 x 10$^{-10}$ m et une surface spécifique généralement comprise entre 800 et 900 m$^2$/g, la préparation de la zéolithe consistant:
- à abaisser le taux de sodium de la zéolithe Y-Na à une valeur inférieure à 3 %, de préférence 2,8 %, en poids par au moins un échange avec une solution d'un sel d'ammonium ionisable de façon à obtenir une zéolithe NH$_4$NaY;
- à faire subir à la zéolithe NH$_4$-NaY un premier traitement hydrothermique, en au moins une étape, à une température comprise entre 530 et 700°C, sous une pression partielle de vapeur d'eau d'au moins 0,026 bar et pendant au moins vingt minutes;
- à abaisser ensuite le taux de sodium à une valeur inférieure à 1 % poids, de préférence inférieure à 0,7 %, en effectuant soit au moins un échange avec au moins une solution d'au moins un sel d'ammonium ionisable, soit un traitement avec au moins une solution d'au moins un acide organique ou inorganique, soit à la fois un échange avec au moins une solution d'au moins un sel d'ammonium ionisable et un traitement avec au moins une solution d'au moins un acide organique ou inorganique;
- à faire subir ensuite à la zéolithe ainsi traitée un deuxième traitement hydrothermique, en au moins une étape, à une température comprise entre 600 et 900°C, la température de ce deuxième traitement hydrothermique étant supérieure de 20 à 250°C à la température du premier traitement hydrothermique;
- à traiter ensuite la zéolithe en au moins une étape par au moins une solution d'un acide organique ou inorganique ou d'un agent complexant acide.

8. Utilisation d'un catalyseur selon l'une des revendications 1 à 4 ou d'un catalyseur préparé selon l'une des revendications 5 à 7, pour l'hydrocraquage de charges hydrocarbonées.

## Patentansprüche

1. Katalysator enthaltend (Gewichts-%)
a) 15 bis 98 % einer Matrix, gewählt aus der Gruppe, die besteht aus wenigstens $\gamma$-, $\eta$-, $\delta$- oder $\theta$-Aluminiumoxid, den Gemischen dieser letzteren, Ton und den Kombinationen der Oxide von wenigstens zwei der Elemente, die gewählt sind aus: Bor, Magnesium, Aluminium, Silicium, Phosphor, Kalzium, Titan, Vanadium, Chrom, Mangan, Eisen, Zink, Gallium, Yttrium, Zirkon, Zinn, Lanthan, Cer, Praseodym und Neodym, gekennzeichnet durch die folgenden Struktureigenschaften:

$$Vpt \quad \geqslant 0,4 \, cm^3 \cdot g^{-1}$$
$$S \quad \geqslant 100 \, m^2 \cdot g^{-1}$$
$$V_{75} \quad \geqslant 0,25 \, cm^3 \cdot g^{-1}$$
$$V_{75}/Vpt \quad \geqslant 0,5$$

b) 1 bis 80 % eines Zeolithen, gekennzeichnet durch:
- ein Molarverhältnis SiO$_2$/Al$_2$O$_3$ zwischen 8 und 70;
- einen Natriumgehalt von weniger als 0,15 Gew.-% bestimmt an dem bei 1100°C kalzinierten Zeolithen;
- einen Parameter a$_0$ der Elementarmasche zwischen 24,55 x 10$^{-10}$ m und 24,24 x 10$^{-10}$ m;
- eine Natriumionenaufnahmekapazität C$_{Na}$, ausgedrückt in Gramm Natrium pro 100 Gramm modifizierten Zeolithen, neutralisiert und kalziniert, von mehr als etwa 0,85;
- eine spezifische Oberfläche von mehr als etwa 400 m$^2 \cdot$ g$^{-1}$;
- eine Wasserdampfadsorptionsfähigkeit bei 25°C (bei einem Verhältnis P/Po gleich 0,10) von mehr als 6 Gew.-%;
- eine Porenverteilung zwischen 1 und 20 % des Porenvolumens, das in Poren von Durchmessern enthalten ist, die zwischen 20 und 80 x 10$^{-10}$ m liegen, wobei der Rest des Porenvolumens im wesentlichen in den Poren von Durchmessern von weniger als 20 x 10$^{-10}$ m enthalten ist.
c) wenigstens ein Metall oder eine Metallverbindung, gewählt aus der Gruppe, die besteht aus den edlen oder nicht-edlen Metallen der Gruppe VIII des Periodensystems der Elemente, wobei die Konzentration an Edelmetall(en) der Gruppe VIII, ausgedrückt als Verbindung(en) dieses oder dieser Metalle, zwischen 0,01 und 5 % liegt und die Konzentration an nicht-edlem bzw. nicht-edlen Metall(en) der Gruppe VIII, ausgedrückt als Verbindungen dieses oder dieser Metalle zwischen 0,01 und 15 % liegt.

13

2. Katalysator, enthaltend (Gewicht)

a) 45 bis 95 % einer Matrix, gewählt aus der Gruppe, die gebildet ist durch wenigstens $\gamma$, $\eta$, ($\delta$ oder $\theta$) -Aluminiumoxid, Gemischen dieser letzteren, Ton, den Kombinationen der Oxide von wenigstens zwei der Elemente, die gewählt sind aus Bor, Magnesium, Aluminium, Silicium, Phosphor, Kalzium, Titan, Vanadium, Chrom, Mangan, Eisen, Zink, Gallium, Yttrium, Zirkon, Zinn, Lanthan, Cer, Praseodym und Neodym und gekennzeichnet durch die folgenden Struktureigenschaften:

Vpt $\geqslant 0,5 \, cm^3 \cdot g^{-1}$
S $\geqslant 150 \, m^2 \cdot g^{-1}$
$V_{75}$ $\geqslant 0,35 \, cm^3 \cdot g^{-1}$
$V_{75}/Vpt \geqslant 0,6$

b) 3 bis 50 % eines Zeolithen, gekennzeichnet durch:
- ein Molverhältnis $SiO_2/Al_2O_3$ zwischen 12 und 40;
- einen Natriumgehalt von weniger als 0,15 Gew.-%, bestimmt am bei 1100°C kalzinierten Zeolithen;
- einen Parameter $a_0$ der Elementarmasche zwischen $24,38 \times 10^{-10}$ m und $24,26 \times 10^{-10}$ m;
- eine Natriumionenaufnahmekapazität $C_{Na}$, ausgedrückt als Gramm Natrium pro 100 Gramm modifizierten Zeolithen, neutralisiert und kalziniert von einem Wert von mehr als etwa 0,85;
- eine spezifische Oberfläche von mehr als etwa $550 m^2 \cdot g^{-1}$;
- eine Wasserdampfadsorptionsfähigkeit bei 25°C (bei einem P/Po Verhältnis gleich 0,10) von mehr als 6 Gew.-%;
- eine Porenverteilung, umfassend zwischen 3 und 15 % des Porenvolumens, das in Poren von Durchmessern enthalten ist, die zwischen $20 \times 10^{-10}$ m und $80 \times 10^{-10}$ m liegen, wobei der Rest des Porenvolumens im wesentlichen in Poren von Durchmessern von weniger als $20 \times 10^{-10}$ m enthalten ist.

c) wenigstens ein Metall oder eine Metallverbindung, gewählt in der Gruppe, die gebildet ist durch die edlen oder nicht-edlen Metalle der Gruppe VIII des Periodensystems der Elemente, wobei die Konzentration an edlem Metall bzw. edlen Metallen der Gruppe VIII, ausgedrückt als Verbindung(en) dieses oder dieser Metalle, zwischen 0,03 und 3 % liegt und die Konzentration an nicht-edlem Metall oder nicht-edlen Metallen der Gruppe VIII, ausgedrückt als Verbindung(en) dieses oder dieser Metalle, zwischen 0,05 und 10 % liegt.

3. Katalysator nach einem der Ansprüche 1 bis 2, dadurch gekennzeichnet, daß man wenigstens eine Verbindung eines Metalls der Gruppe VIII, gewählt aus der durch Kobalt und Nickel gebildeten Gruppe, in Zuordnung zu wenigstens einer Verbindung eines Metalls der Gruppe VI des Periodensystems der Elemente verwendet, wobei die Gesamtkonzentration an Metallen der Gruppen VIII und VI zwischen 5 und 40 % beträgt und das Gewichtsverhältnis (ausgedrückt in metallischen Oxiden) von Metall oder Metallen der Gruppe VIII zu Metall oder Metallen der Gruppe VI zwischen 0,05 und 0,8 beträgt.

4. Katalysator nach Anspruch 3, dadurch gekennzeichnet, daß das Metall der Gruppe VI Molybdän oder Wolfram ist, die Gesamtkonzentration an Metallen der Gruppen VIII und VI zwischen 12 und 30 % liegt und das Gewichtsverhältnis von Metall oder Metallen der Gruppe VIII zu Metall oder Metallen der Gruppe VI zwischen 0,13 und 0,5 beträgt.

5. Verfahren zum Herstellen eines Katalysators nach einem der Ansprüche 1 bis 4, dadurch gekennzeichnet, daß eine Matrix mit einem Zeolithen vermischt wird und in einen oder mehreren Stufen entweder in die Matrix oder in den Zeolithen oder in das Gemisch aus Matrix und Zeolithen das oder die Metall(e) oder die Metallverbindung(en) der Gruppe VIII und gegebenenfalls der Gruppe VI eingeführt wird bzw. werden, wobei der Zeolith hergestellt wird aus einem NaY-Zeolithen, der hauptsächlich ein Molverhältnis $SiO_2/Al_2O_3$ zwischen 4 und 6, einen Kristallparameter zwischen $24,60 \times 10^{-10}$ m bis $24,80 \times 10^{-10}$ m und eine Oberfläche aufweist, die im allgemeinen zwischen 750 und 950 m²/g liegt, wobei die Herstellung des Zeolithen darin besteht:
- den Natriumanteil des NaY-Zeolithen auf einen Wert von weniger als etwa 3 Gew.-% durch wenigstens einen Austausch mit einer Lösung eines ionisierbaren Ammoniumsalzes, derart, daß ein $NH_4NaY$-Zeolith erhalten wird, zu senken;
- Kalzinieren in wenigstens einer Stufe des $NH_4NaY$-Zeolithen (hydrothermische Behandlung) zwischen 500 und 880°C zwischen 0,05 und 10 bar wenigstens 20 Minuten lang, um einen sogenannten stabilisierten Zeolithen zu erhalten;
- Behandeln des sogenannten stabilisierten Zeolithen in wenigstens einer Stufe durch wenigstens eine organische oder anorganische Säure oder ein saures komplexbildendes Mittel.

6. Verfahren nach Anspruch 5, dadurch gekennzeichnet, daß die Herstellung des Zeolithen darin besteht:
- den Natriumgehalt des Y-Na-Zeolithen auf einen Wert von unter 2,8 Gew.-% etwa durch wenigstens einen Austausch mit einer Lösung eines ionisierbaren Ammoniumsalzes derart zu senken, daß ein $NH_4NaY$-Zeolith erhalten wird;
- in wenigstens einer Stufe den $NH_4NaY$-Zeolithen (hydrothermische Behandlung) zwischen 600 und 800°C unter einem Wasserstoffpartialdruck zwischen 0,1 und 5 bar während wenigstens einer Stunde zum Erhalt eines sogenannten stabilisierten Zeolithen zu kalzinieren;
- den sogenannten stabilisierten Zeolithen in wenigstens einer Stufe durch eine Chlorwasserstoffsäurelösung oder Salpetersäurelösung von einer Normalität zwischen 0,1 und 11 n, vorzugsweise zwischen 0,5 und 3 n zu behandeln.

7. Verfahren zum Herstellen eines Katalysators nach einem der Ansprüche 1 bis 4, darin bestehend, daß eine

14

Matrix mit einem Zeolithen vermischt und in einer oder mehreren Stufen entweder in die Matrix oder in den Zeolithen oder in das Gemisch aus Matrix und Zeolithen das oder die Metall(e) oder die Verbindung(en) von Metallen der Gruppe VIII und gegebenenfalls der Gruppe VI eingeführt werden, wobei der Zeolith hergestellt wird aus einem Y-Na-Zeolithen, der hauptsächlich ein Mol-Verhältnis $SiO_2/Al_2O_3$ zwischen 4 und 8, einen Kristallparameter zwischen 24,65 und 24,75 x $10^{-10}$ m und eine spezifische Oberfläche aufweist, die im allgemeinen zwischen 800 und 900 m2/g beträgt,

wobei die Herstellung des Zeolithen daring besteht:

- den Natriumanteil des Y-Na-Zeolithen auf einen Wert von weniger als 3 %, vorzugsweise 2,8 % (Gew.) durch wenigstens einen Austausch mit einer Lösung eines ionisierbaren Ammoniumsalzes, derart, daß ein $NH_4NaY$-Zeolith erhalten wird, gesenkt wird;

- den $NH_4NaY$-Zeolithen eine erste hydrothermische Behandlung in wenigstens einer Stufe bei einer Temperatur zwischen 530 und 700°C unter einem Wasserdampfteildruck von wenigstens 0,026 bar und während wenigstens zwanzig Minuten erfahren zu lassen;

- dann den Natriumanteil auf einen Wert von weniger als 1 Gew.-%, vorzugsweise weniger als 0,7 Gew.-%, zu senken, indem entweder wenigstens ein Austausch mit wenigstens einer Lösung eines ionisierbaren Ammoniumsalzes oder eine Behandlung mit wenigstens einer Lösung wenigstens einer organischen oder anorganischen Säure oder gleichzeitig ein Austausch mit wenigstens einer Lösung wenigstens eines ionisierbaren Ammoniumsalzes und einer Behandlung mit wenigstens einer Lösung wenigstens einer organischen oder anorganischen Säure vorgenommen wird;

- anschließend den so behandelten Zeolithen einer zweiten hydrothermischen Behandlung in wenigstens einer Stufe bei einer Temperatur zwischen 600 und 900°C auszusetzen, wobei die Temperatur dieser zweiten hydrothermischen Behandlung um 20 bis 250°C höher als die Temperatur der ersten hydrothermischen Behandlung liegt;

- und dann den Zeolithen in wenigstens einer Stufe durch wenigstens eine Lösung einer organischen Säure oder anorganischen Säure oder eines sauren Komplexbildner - Mittels zu behandeln.

8. Verwendung eines Katalysators nach einem der Ansprüche 1 bis 4 oder eines nach einem der Ansprüche 5 bis 7 hergestellten Katalysators zum Hydrocracken von kohlenwasserstoffhaltigen Chargen.

**Claims**

1. Catalyst containing by weight:

a) 15 to 98 % of a matrix chosen from a group constituted by at least $\gamma$, $\eta$, $\delta$ or $\theta$ alumina, mixtures of these, clay and combinations of oxides of at least two of the elements chosen from: boron, magnesium, aluminium, silicon, phosphorus, calcium, titanium, vanadium, chromium, manganese, iron, zinc, gallium, yttrium, zirconium, tin, lanthanum, cerium, praseodymium and neodymium, and characterized by the following textural properties:

$$Vpt \geqslant 0.4 \text{ cm}^3 \cdot \text{g}^{-1}$$
$$S \geqslant 100 \text{ m}^2 \cdot \text{g}^{-1}$$
$$V_{75} \geqslant 0.25 \text{ cm}^3 \cdot \text{g}^{-1}$$
$$V_{75}/Vpt \geqslant 0.5$$

b) 1 to 80 % of zeolite characterized by:

- an $SiO_2/Al_2O_3$ molar ratio of between 8 and 70;

- a sodium content less than 0.15 % by weight determined on the zeolite calcinated at 1100°C;

- a unit mesh parameter $a_0$ of between 24.55 x $10^{-10}$ m and 24.24 x $10^{-10}$ m;

- a sodium ion recovery capacity $C_{Na}$, expressed as grams of sodium per 100 grams of neutralized and calcinated modified zeolite greater than about 0.85;

- a specific surface area greater than about 400 m2 · g-1;

- a water vapour adsorption capacity at 25°C (with a P/Po ratio of 0.10) greater than 6 % by weight;

- a pore distribution between 1 and 20 % of the pore volume contained in pores of diameters between 20 and 80 x $20^{-10}$ m, the remaining pore volume being contained essentially in pores of diameters less than 20 x $10^{-10}$ m.

c) At least one metal or compound of a metal chosen from the group constituted by the noble or non-noble metals of Group VIII of the periodic classification of the elements, the concentration of metal or noble metals of Group VIII expressed as compound(s) of this or these metals, being between 0.01 and 5 %, the concentration of metal or non-noble metals of Group VIII, expressed as compound(s) of this or these metals, being between 0.01 and 15 %.

2. Catalyst containing by weight:

a) 45 to 95 % of a matrix chosen from the group constituted by at least $\gamma$, $\eta$, ($\delta$ or $\theta$) alumina, mixtures of these, clay, combinations of oxides of at least two of the elements chosen from boron, magnesium, aluminium, silicon, phosphorus, calcium, titanium, vanadium, chromium, manganese, iron, zinc, gallium, yttrium, zirconium, tin, lanthanum, cerium, praseodymium and neodymium, and characterized by the following textural properties:

Vpt $\geqslant 0.5$ cm$^3 \cdot$ g$^{-1}$
S $\geqslant 150$ m$^2 \cdot$ g$^{-1}$
V$_{75}$ $\geqslant 0.35$ cm$^3 \cdot$ g$^{-1}$
V$_{75}$/Vpt $\geqslant 0.6$

b) 3 to 50 % of a zeolite characterized:
- an SO$_2$/Al$_2$O$_3$ molar ratio of between 12 and 40;
- a sodium content of less than 0.15 % by weight determined on the zeolite calcinated at 1100°C;
- a unit mesh parameter a$_o$ of between 24.38 x 10$^{-10}$ m and 24.26 x 10$^{-10}$ m;
- a sodium ion recovery capacity C$_{Na}$, expressed as grams of sodium per 100 grams of neutralized and calcinated modified zeolite, greater than about 0.85;
- a specific surface area greater than about 500 m$^2$.g$^{-1}$;
- a water vapour adsorption capacity at 25°C (with a P/Po ratio of 0.10) greater than 6 % by weight;
- a pore distribution between 3 and 15 % of the pore volume contained in pores of diameters between 20 x 10$^{-10}$ m and 80 x 10$^{-10}$ m, the remaining pore volume being contained essentially in the pores of diameters less than 20 x 10$^{-10}$ m.
c) At least one metal or compound of a metal chosen from the group constituted by the noble or non-noble metals of Group VIII of the periodic classification of the elements, the concentration of metal or noble metals of Group VIII, expressed as compound(s) of this or these metals, being between 0.03 and 3 %, the concentration of metal or non-noble metals of Group VIII, expressed as compound(s) of this or these metals, being between 0.05 and 10 %.

3. A catalyst according to either Claim 1 or 2, in which is used at least one compound of a metal of Group VIII chosen from the group constituted by cobalt and nickel, in combination with at least one compound of a metal of Group VI of the periodic classification of elements, the total concentration of metals of groups VIII and VI being between 5 and 40 %, the weight ratio (expressed as metal oxides) metal or metals of Group VIII/metal or metals of Group VI being between 0.05 and 0.8.

4. A catalyst according to Claim 3 in which the metal of Group VI is molybdenum or tungsten, the total concentration of metals of groups VIII and VI being between 12 and 30 %, the weight ratio metal or metals of Group VIII/metal or metals of Group VI being between 0.13 and 0.5.

5. A method for the manufacture of a catalyst according to any of claims 1 to 4, consisting in mixing a matrix with a zeolite and introducing in one or several stages either into the matrix or into the zeolite, or into the matrix and zeolite mixture the metal or metals or compound or compounds of metals of Group VIII and if necessary, of Group VI, the zeolite being prepared from an NaY zeolite generally having an SiO$_2$/Al$_2$O$_3$ molar ratio between 4 and 6, a crystal parameter between 24.60 x 10$^{-10}$ m to 24.80 x 10$^{-10}$ m and a surface area of generally between 750 and 950 m$^2$/g, the preparation of the zeolite consisting:
- in reducing the sodium content of the NaY zeolite to a value of less than 3 % by weight by at least one exchange with a solution of an ionisable ammonium salt in order to obtain an NH$_4$NaY zeolite;
- in calcinating between 500 and 880°C the NH$_4$NaY zeolite in at least one stage (hydrothermal treatment) at between 0.05 and 10 bars during at least 20 minutes, to obtain a so - called stabilized zeolite;
- in treating the so - called stabilized zeolite in at least one stage with at least one solution of an organic or inorganic acid or acid complexing agent.

6. A method according to claim 5 in which the preparation of the zeolite consists:
- in reducing the sodium content of the Y-Na zeolite to a value below about 2.8 % by weight by at least one exchange with a solution of an ionisable ammonium salt in order to obtain an NH$_4$NaY zeolite;
- in calcinating the NH$_4$NaY zeolite in one stage (hydrothermal treatment) between 600 and 830 under a partial water vapour pressure between 0.1 and bars for at least one hour to obtain a socalled stabilized zeolite;
- in treating said stabilized zeolite in at least one stage with a solution of hydrochloric asid or nitric acid of normality between 0.1 and 11 N, preferably between 0.5 and 3 N.

7. A method for the manufacture of a catalyst according to any of claims 1 to 4, consisting in mixing a matrix with a zeolite and introducing it in one or several stages ether into the matrix or into the zeolite or into the mixture of matrix and zeolite the metal or metals or compound(s) of metals of Group VIII and if necessary Group VI, the zeolite being prepared from a Y-Na seolite generally having an SiO$_2$/Al$_2$O$_3$ molar ratio between about 4 and 6, a crystal parameter between 24.65 and 24.75 x 10$^{-10}$ m and a specific surface area generally between 800 and 900 m$^2$/g, the preparation of the zeolite consisting:
- in reducing the sodium content of the Y-Na zeolite to a value less than 3 %, preferably 2.8 %, by weight by at least one exchange with a solution of ionisable ammonium salt in order to obtain an NH$_4$NaY zeolite;
- in subjecting the NH$_4$NaY zeolite to a first hydrothermal treatment, in at least one stage, at a temperature between 530 and 700°C, under a partial water vapour pressure of at least 0.026 bar for at least 20 minutes;
- in then reducing the sodium content to a value of less than 1 % by weight, preferably less than 0.7 % either by at least one exchange with at least one solution of at least one ionisable ammonium salt, or treatment with at least one solution of at least one organic or inorganic acid, or at the same time an exchange with at least one solution of at least one ionisable ammonium salt and a treatment with at least one solution of at least one organic or inorganic acid;
- in then subjecting the zeolite thus treated to a second hydrothermal treatment in at least one stage at a temperature between 600 and 900°C, the temperature of this second hydrothermal treatment being 20 to 250°C above the temperature of the first hydrothermal treatment;

- in then treating the zeolite in at least one stage by at least one solution of organic or inorganic acid, or an acid complexing agent.

8. The utilization of a catalyst according to any of the claims 1 to 4 or a catalyst prepared according to any of the claims 5 to 7 for hydrocracking hydrocarbon charges.